# EUROPÄISCHE PATENTSCHRIFT

(11) **EP 0 824 693 B1**
(45) Veröffentlichungstag und Bekanntmachung des Hinweises auf die Patenterteilung: **11.04.2007**
(21) Anmeldenummer: 96945549.2
(22) Anmeldetag: 19.11.1996
(51) Int. Cl.: G01N 27/407

(54) **MESSFÜHLER**
MEASUREMENT SENSOR
CAPTEUR DE MESURE

(30) Priorität: 06.03.1996 DE 19608543
(43) Veröffentlichungstag der Anmeldung: 25.02.1998
(73) Patentinhaber: ROBERT BOSCH GMBH, 70442 Stuttgart (DE)
(72) Erfinder: GRASER, Theodor, D-70191 Stuttgart (DE); HOETZEL, Gerhard, D-70376 Stuttgart (DE); WEHRMANN, Johann, D-70184 Stuttgart (DE); EISENSCHMID, Heinz, D-70499 Stuttgart (DE)
(86) Internationale Anmeldenummer: PCT/DE1996/002201
(87) Internationale Veröffentlichungsnummer: WO 1997/033164

(56) Entgegenhaltungen:
- DE-A- 4 015 486
- US-A- 4 986 892
- US-A- 5 329 806

## Beschreibung

### Stand der Technik

Die Erfindung betrifft einen Meßfühler, insbesondere zur Bestimmung des Sauerstoffgehaltes in Abgasen von Verbrennungsmotoren, nach dem Oberbegriff des Anspruchs 1.

Aus der EP A1 624 791 (US 5 329 806) ist ein Gassensor bekannt, bei dem in einem rohrförmigen, metallischen Gehäuse ein Sensorelement gasdicht fixiert ist. Das rohrförmige Gehäuse hat am unteren Teil eine radial nach außen weisende Lippe, die einen Dichtflansch bildet. Der Gassensor wird in eine Öffnung einer Abgasanlage eingesetzt, wobei die Lippe auf einen in der Öffnung ausgebildeten Dichtsitz aufsitzt. Über das Gehäuse ist eine Hohlschraube geführt, die in ein in der Öffnung angeordnetes Gewinde eingeschraubt wird und dabei die Lippe gasdicht mit der Abgasanlage verbindet. Problematisch bei dieser Ausführung ist jedoch, daß durch das Pressen bzw. Stauchen des relativ dünnwandigen Materials des Gehäuses Mikrorisse an der Lippe auftreten können, die zur Undichtheit des Gehäuses führen.

### Vorteile der Erfindung

Die Erfindung mit den kennzeichnenden Merkmalen des Hauptanspruchs hat demgegenüber den Vorteil, daß der Dichtflansch absolut gasdicht ist. Ein zweiteiliges Gehäuse mit einem am anschlußseitigen Gehäuseteil angeordneten Dichtflansch ist sowohl fertigungstechnisch einfach herzustellen als auch montagetechnisch einfach zu handhaben.

Durch die in den Unteransprüchen aufgeführten Maßnahmen sind vorteilhafte Weiterbildungen und Verbesserungen des im Anspruch 1 angegebenen Meßfühlern möglich. Die Herstellung des Dichtflansches durch das Fertigungsverfahren Rundkneten hat sich als besonders geeignet herausgestellt. Zweckmäßig ist ferner, am Abgasrohr ein Anschlußstück anzubringen, das an der Stirnfläche einen Dichtsitz für den Dichtflansch ausbildet. Durch Aufsetzen einer Überwurfmutter auf den Dichtflansch und deren Zusammenwirken mit einem am Anschlußstück vorgesehenen Gewinde wird der Dichtflansch gasdicht mit dem Anschlußstück verbunden.

### Zeichnung

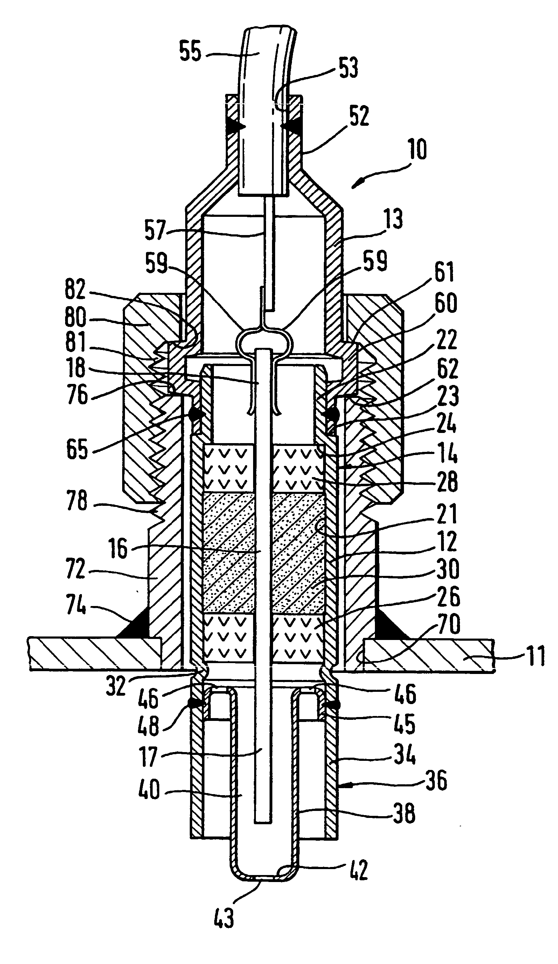

Ein Ausführungsbeispiel der Erfindung ist in der Zeichnung dargestellt und in der nachfolgenden Beschreibung näher erläutert. Die einzige Figur zeigt einen Längsschnitt durch einen in ein Abgasrohr eingesetzten Gassensor.

### Ausführungsbeispiel

Ein Gassensor 10, beispielsweise ein elektrochemischer Sauerstoffsensor, ist in ein Abgasrohr 11 eingesetzt und hat ein meßgasseitiges metallisches Gehäuseteil 12 und ein anschlußseitiges metallisches Gehäuseteil 13, die zusammen ein Gehäuse 14 bilden. Im Gehäuse 14 ist ein planares Sensorelement 16 mit einem meßgasseitigen Abschnitt 17 und einem anschlußseitigen Abschnitt 18 gasdicht fixiert.

Der meßgasseitige Gehäuseteil 12 ist ein beispielsweise beidseitig offenes Rohrelement mit einer inneren Zylinderwand 21. Am anschlußseitigen Ende hat der meßgasseitige Gehäuseteil 12 einen Abschnitt 22, der beispielsweise einen geringeren Außendurchmesser und einen geringeren Innendurchmesser aufweist. Dadurch bildet sich am Rohrelement eine äußere Ringfläche 23 und eine innere Ringfläche 24 aus. Der meßgasseitige Gehäuseteil 12 hat ferner beispielsweise am meßgasseitigen Ende eine zylinderförmige Hülse 34, die über das meßgasseitige Ende des Sensorelements 16 hinaus verläuft und dadurch eine äußere Schutzhülse 36 für den meßgasseitigen Abschnitt 17 des Sensorelements 16 bildet.

In der Hülse 34 ist eine innere Schutzhülse 38 angeordnet, die den meßgasseitigen Abschnitt 17 des Sensorelements 16 mit Abstand umgibt und im Innern einen Meßgasraum 40 bildet. Die innere Schutzhülse 38 hat einen Boden 42, in dem eine erste Öffnung 43 für den Gasein- und/oder Gasaustritt eingebracht ist. Am zum Boden 42 gegenüberliegenden Ende ist die innere Schutzhülle 38 mit einem Flansch 45 ausgeführt, in dem weitere Öffnungen 46 für den Gasein- und/oder Gasaustritt eingebracht sind. Die innere Schutzhülle 38 ist am Flansch 45 mit der äußeren Schutzhülle 36 mittels einer beispielsweise umlaufenden Schweißnaht 48 verschweißt. Es ist aber auch möglich, die Hülse 34 als getrenntes Bauteil mit der inneren Schutzhülse 38 zu verbinden und das dann vorliegende, vormontierte Doppelschutzrohr mit dem Rohrelement zu verschweißen.

Im meßgasseitigen Gehäuseteil 12 befindet sich ein meßgasseitiges Keramikformteil 26, ein anschlußseitiges Keramikformteil 28 und ein dazwischen angeordnetes Dichtelement 30. Die Keramikformteile 26 und 28 bestehen beispielsweise aus Al₂O₃ und weisen jeweils nicht näher bezeichnete Durchführungen für das Sensorelement 16 auf. Das Dichtelement 30 besteht beispielsweise aus Steatit und wird im einem vorgepreßten Zustand mit ebenfalls einer Durchführung für das Sensorelement 16 eingesetzt.

Die Fixierung des Sensorelements 16 im meßgasseitigen Gehäuseteil 12 geschieht dadurch, daß nacheinander das anschlußseitige Keramikformteil 28, das Dichtelement 30 im gepreßten Zustand und das meßgasseitige Keramikformteil 26 in den meßgasseitige Gehäuseteil 12 eingesetzt werden. Dabei liegt das anschlußseitige Keramikformteil 28 auf der inneren Ringfläche 24 an. Die nicht näher bezeichneten Durchführungen für das Sensorelement befinden sich dabei fluchtend übereinander. Anschließend wird das Sensorelement 16 durch die Durchführungen geschoben, bis es seine vorgegebene axiale Position einnimmt. Danach wird meßgasseitig mit einem Stempel auf das meßgasseitige Keramikformteil 26 mit einer Anpreßkraft eingewirkt, die derart bemessen ist, daß das vorgepreßte Dichtelement 30 zerquetscht wird, so daß sich die Pulverbestandteile sowohl an das Sensorelement 16 als auch an die Innenwand 21 andrücken. Während der Krafteinwirkung auf das meßgasseitige Keramikformteil 26 wird eine radial verlaufende und nach innen weisende Einformung 32 am meßgasseitigen Ende des meßgasseitigen Keramikformteils 26 in das Rohrelement eingebracht. Dadurch wird das meßgasseitige Keramikformteil 26 in der Druckposition bezüglich des Dichtelements 30 gehalten.

Der anschlußseitige Gehäuseteil 13 ist zylinderförmig ausgeführt und hat einen sich verjüngenden Abschnitt 52 mit einer Öffnung 53. In die Öffnung 53 ist beispielsweise ein metallisches Mantelrohr 55 eingeschweißt. Im Mantelrohr 55 sind Anschlußkabel 57 für das Sensorelement 16 geführt. Die Anschlußkabel 57 sind mit Kontaktierstücken 59 verbunden, die mit nicht näher dargestellten, am anschlußseitigen Abschnitt 18 des Sensorelements 16 angeordneten Anschlußkontakten kontaktiert sind. Das Kontaktieren des Sensorelements 16 kann beispielsweise durch Klemmen oder durch eine stoffschlüssige Verbindung realisiert werden. Der Kabelausgang durch die Öffnung 53 kann jedoch auch mittels einer temperaturbeständigen PTFE-Kabeldurchführung realisiert werden.

Am sensorelementseitigen Ende weist der anschlußseitige Gehäuseteil 13 einen radial umlaufenden Dichtflansch 60 mit einer oberen Ringfläche 61 und einer unteren Ringfläche 62 auf. Der Dichtflansch 60 ist im vorliegenden Ausführungsbeispiel aus dem Material des anschlußseitigen Gehäuseteils 13 geformt. Der Dichtflansch 60 kann durch verschiedene Umformverfahren hergestellt werden. Als besonders geeignetes Umformverfahren, mit dem ein stabiler Dichtflansch 60 aus dem Material des anschlußseitigen Gehäuseteils 13 geformt werden kann, hat sich Rundkneten erwiesen. Als Alternative ist es auch denkbar, an den zylindrischen anschlußseitigen Gehäuseteil 13 einen Ring anzuschweißen, der dann den Dichtflansch 60 bildet.

Nach dem Kontaktierung des Sensorelements 16 mit den Kontaktstücken 59 wird der anschlußseitige Gehäuseteil 13 auf den Abschnitt 22 des meßgasseitigen Gehäuseteils 12 aufgesteckt, wobei als axialer Anschlag die äußere Ringfläche 23 des meßgasseitigen Gehäuseteils 12 dient. Anschließend wird der anschlußseitige Gehäuseteil 13 mittels einer radial umlaufenden Schweißnaht 65 mit dem meßgasseitigen Gehäuseteil 12 gasdicht verschweißt.

Im Abgasrohr 11 ist eine Öffnung 70 vorgesehen, in die ein zylindrisches Anschlußstück 72 mit dem einen Ende eingesetzt ist. Das Anschlußstück 72 ist dabei mit dem Abgasrohr 11 mittels einer umlaufenden Schweißnaht 74 gasdicht verschweißt. Am anderen Ende weist das Anschlußstück 72 eine ebene Ringfläche 76 auf, auf der die untere Ringfläche 62 des Dichtflansches 60 aufliegt. Die Ringfläche 76 bildet somit einen Dichtsitz für den Dichtflansch 60. Am äußeren Umfang besitzt das Anschlußstück 72 einen Gewindeabschnitt 78.

Über den anschlußseitigen Gehäuseteil 13 ist eine Überwurfmutter 80 mit einem Innengewinde 81 und einer inneren Ringfläche 82 geführt. Das Innengewinde 81 wird auf den Gewindeabschnitt 78 des Anschlußstücks 72 geschraubt, wobei die innere Ringfläche 82 auf die obere Ringfläche 61 des Dichtflanschs 60 drückt. Durch Festziehen der Überwurfmutter 80 wird die untere Ringfläche 62 des Dichtflansches 60 fest auf die den Dichtsitz ausbildende Ringfläche 76 des Anschlußstücks 72 gepreßt. Dadurch entsteht eine gasdichte Befestigung des Gassensors 10 im Abgasrohr 11.

Zur Befestigung des Gassensors 10 im Abgasrohr 11 sind jedoch auch andere Formen von Befestigungsmitteln möglich. Beispielsweise die Befestigung mittels einer Hohlschraube, die am Außenumfang ein Gewinde aufweist, das in ein am Anschlußstück 72 angeordnetes Innengewinde eingeschraubt wird, wobei der Dichtsitz für den Dichtflansch 60 durch eine zusätzliche Ringfläche im Inneren des Anschlußstücks 72 ausgeführt sein muß. Es ist auch denkbar, zwischen Anschlußstück 72 und der Hohlschraube einen Adapter zwischenzuschalten, wobei dann der Gassensor 10 auf einer Ringfläche des Adapters mit dem Dichtflansch 60 aufsitzt und der Adapter mit einer weiteren Ringfläche auf der Ringfläche des Anschlußstücks 72 aufliegt.

## Patentansprüche

1. Meßfühler (10), insbesondere zur Bestimmung des Sauerstoffgehaltes in Abgasen von Verbrennungsmotoren, mit einem in einem Gehäuse (14) fixierten Sensorelement (16), mit einem am Gehäuse angebrachten Dichtflansch (60), der in einer Einbauposition auf einem Dichtsitz aufliegt, und mit einem Befestigungselement (80), das über das Gehäuse geführt ist und in eine mit einem Gewinde (78) versehene Öffnung (70) einschraubbar ist, wobei das Befestigungselement den Dichtflansch auf den Dichtsitz preßt, **dadurch gekennzeichnet, daß** das Gehäuse (14) einen meßgasseitigen Gehäuseteil (12) und einen anschlußseitigen Gehäuseteil (13) aufweist und daß der Dichtflansch (60) am anschlußseitigen Gehäuseteil (13) angeordnet ist.

2. Meßfühler nach Anspruch 1, **dadurch gekennzeichnet, daß** der Dichtflansch (60) aus dem Material des anschlußseitigen Gehäuseteils (13) geformt ist.

3. Meßfühler nach Anspruch 1 oder 2, **dadurch gekennzeichnet, daß** der Dichtflansch (60) mittels Rundkneten hergesetllt ist.

4. Meßfühler nach Anspruch 1, **dadurch gekennzeichnet, daß** ein Anschlußstück (72) vorgesehen ist, das die Öffnung (70) gasdicht umschließt, und daß der Dichtsitz am Anschlußstück (72) als eine ebene Ringfläche (76) ausgebildet ist.

## Claims

1. Measuring sensor (10), in particular for determining the oxygen content in exhaust gases of internal combustion engines, with a sensor element (16) fixed in a housing (14), with a sealing flange (60) which is attached to the housing and in an installation position lies on a sealing seat, and with a fastening element (80) which is led over the housing and can be screwed into an orifice (70) provided with a thread (78), the fastening element pressing the sealing flange onto the sealing seat, **characterized in that** the housing (14) has a housing part (12) located on the measurement-gas side and a connection-side housing part (13), and **in that** the sealing flange (60) is arranged on the connection-side housing part (13).

2. Measuring sensor according to Claim 1, **characterized in that** the sealing flange (60) is formed from the material of the connection-side housing part (13).

3. Measuring sensor according to Claim 1 or 2, **characterized in that** the sealing flange (60) is produced by means of swaging.

4. Measuring sensor according to Claim 1, **characterized in that** a connection piece (72) is provided, which surrounds the orifice (70) in a gas-tight manner, and **in that** the sealing seat is formed as a plane annular surface (76) on the connection piece (72).

## Revendications

1. Capteur de mesure (10), en particulier pour déterminer la teneur en oxygène des gaz d'échappement de moteurs à combustion interne, comprenant un élément sensible (16) fixé dans un boîtier (14), une bride d'étanchéité (60) fixée sur le boîtier et reposant sur un siège d'étanchéité dans une position de montage, et un élément de fixation (80) situé au-dessus du boîtier et vissé dans une ouverture (70) munie d'un filet (78), l'élément de fixation pressant la bride d'étanchéité sur le siège d'étanchéité,
**caractérisé en ce que**
le boîtier (14) présente une partie de boîtier (12) du côté mesure du gaz et une partie de boîtier (13) du côté du raccordement, et la bride d'étanchéité (60) est disposée sur la partie de boîtier (13) du côté du raccordement.

2. Capteur de mesure selon la revendication 1,
**caractérisé en ce que**
la bride d'étanchéité (60) est formée à partir du matériau de la partie de boîtier (13) du côté du raccordement.

3. Capteur de mesure selon la revendication 1 ou 2,
**caractérisé en ce que**
la bride d'étanchéité (60) est fabriquée par rétreint.

4. Capteur de mesure selon la revendication 1,
**caractérisé en ce qu'**
une pièce de raccordement (72) entoure l'ouverture (70) de façon étanche aux gaz et le siège d'étanchéité est une surface annulaire plane (76) formée sur la pièce de raccordement (72)
